# EUROPÄISCHE PATENTSCHRIFT

(11) **EP 0 815 782 B1**
(45) Veröffentlichungstag und Bekanntmachung des Hinweises auf die Patenterteilung: **05.04.2000**
(21) Anmeldenummer: 97110109.2
(22) Anmeldetag: 20.06.1997
(51) Int. Cl.: A47J 23/00

(54) **Kirschentkerner**
Cherry pitter
Dénoyauteur de cerises

(30) Priorität: 26.06.1996 DE 19625527; 16.08.1996 DE 19633023
(43) Veröffentlichungstag der Anmeldung: 07.01.1998
(73) Patentinhaber: Westmark Schulte GmbH & Co. KG, D-58849 Herscheid (DE)
(72) Erfinder: Baukloh, Horst, 58540 Meinerzhagen (DE)
(74) Vertreter: Hassler, Werner, Dr.

(56) Entgegenhaltungen:
- CH-A- 172 022
- DE-B- 1 040 759
- DE-C- 4 104 414
- FR-A- 984 198

## Beschreibung

Die Erfindung betrifft einen Kirschentkerner mit einem Gehäuse mit einer einen Durchgang für den Kirschkern aufweisenden Entkernermulde, mit einem in dem Gehäuse geführten, durch den Durchgang bewegbaren, an einem in einem schwenkbar gelagerten Zapfen gehaltenen, in Abstreifstellung vorgespannten Arm sitzenden Entkernerdorn mit einem Widerhakenkopf und mit einem in der Rücklaufbahn des Entkernerdorns angeordneten Kirschabstreifer, an den ein Auslaufkanal anschließt.

Die DE-U-8700261 beschreibt einen Kirschentkener mit einem linear geführten Schieber mit einen handbetätigten Stößel. Da die Kirschen von dem Kirschabstreifer frei nach unten auf eine Ablenkplatte fallen, ist die sichere Führung der Kirschen unzureichend.

Ein Kirschentkerner der gattungsgemäßen Art ist in der DE-A-4104414 beschrieben. Auch hier ist infolge des geringen Schwenkwinkel des Armes und des freien Falls der abgestreiften Kirschen keine sichere Führung derselben gewährleistet. Die Abstreifung erfolgt allein unter der Wirkung der Rückstellfeder so daß unter ungünstigen Verhältnissen kein sauberes Abstreifen gesichert ist.

Ein ähnlicher Kirschentkerner nach der CH-A-172022 ohne Gehäuse leitet die entkernten Kirschen quer zur Schwenkebene des Armes ab. Der freie Fallweg beeinträchtigt die Führung der entkernten Kirschen.

Aufgabe der Erfindung ist ein sicheres Abstreifen und Führen der entkernten Kirschen.

Diese Aufgabe wird nach der Erfindung dadurch gelöst, daß an dem Zapfen eine über einen Bogen von mehr als 180° verschwenkbare Kurbel mit einem Handgriff angeordnet ist und daß der Kirschabstreifer mehrere Stege umfaßt, zwischen denen der Entkernerdorn hindurchtritt und die eine in einen Austritt offene Mulde bilden.

Die Erfindung unterscheidet sich insofern vom Stand der Technik, als die über einen Winkel von mehr als 180° hin- und hergehende Schwenkbewegung ein sicheres Abstreifen ermöglicht. Durch die Mitnahme der jeweils entkernten Kirsche auf der kreisförmigen Rücklaufbahn erfolgt eine sichere Trennung und Ausscheidung der entkernten Kirschen. Die Stege des Abstreifers bilden eine Führung oder Rinne für die abgestreiften Kirschen, so daß dieselben zwangsweise in den Austritt geleitet werden. Auch beim Abstreifen ist eine Kraftausübung durch die Kurbel möglich. Die Kurbelbewegung ist ergonomisch vorteilhaft und ermüdungsfrei.

Eine vorteilhafte Rinnenform wird dadurch erzielt, daß die Oberkanten der mittleren Stege bogenförmig mit geneigtem Auslauf gegen den Austritt eingetieft sind. So werden die entkernten Kirschen nach dem Abstreifen rollend in der Rinne geführt.

Eine leichtgängige Führung der Kurbel wird dadurch erreicht, daß der Handgriff der Kurbel in einer Bogenführung der Seitenwand des Gehäuses geführt ist.

Eine besonders robuste Ausführung wird dadurch erreicht, daß der Zapfen der Kurbel durch eine Schenkelfeder vorgespannt ist.

Die Bewegung wird dadurch auf den Entkernerdorn übertragen, daß der Entkernerdorn abgewinkelt an einem Arm sitzt, der radial in den Zapfen eingesetzt ist.

Ein sicheres Entkernen und schonendes Abstreifen wird dadurch erzielt, daß die Spitze des Entkernerdorns etwa in Umfangsrichtung der Bogenführung ausgerichtet ist.

Ein Ausführungsbeispiel wird anhand der Zeichnungen erläutert, in denen darstellen:
Fig. 1 einen Schnitt durch den Kirschentkerner und

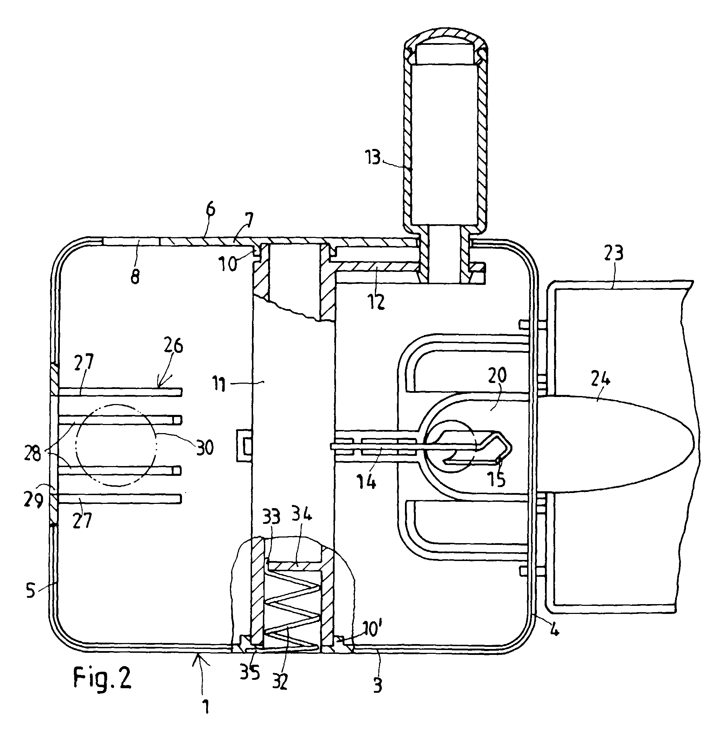

Fig. 2 eine Draufsicht auf das Gehäuse nach Abnahme des Deckels.

Ein Gehäuse 1 ist durch einen Deckel 16 abgeschlossen und stützt sich auf rutschfesten Füßen 2 ab. Die Seitenwände 3, 4, 5 haben oben einen horizontalen, geraden Abschluß mit einer Stufenkante. Die Seitenwand 6 weist im Mittelbereich einen etwa halbkreisförmigen Vorsprung 7 auf. Der Kreisbogen des Vorsprungs 7 setzt sich in eine Berandung je eines Schlitzes 8, 9 fort, der mit einem Bogenabschnitt in die Seitenwand 6 hineinreicht.

In Augen 10, 10' der Seitenwände 3 und 6 ist ein Zapfen 11 gelagert, der eine Kurbel 12 mit einem Handgriff 13 trägt. Der Zapfen 11 nimmt ferner einen radial ausgerichteten Arm 14 mit einem abgewinkelt anschließenden, widerhakenartigen Entkernerdorn 15 auf. Die Spitze des Entkernerdorns 15 ist etwa in Umfangsrichtung der Bogenführung 19 ausgerichtet. Innerhalb des Zapfens 11 befindet sich eine Schenkelfeder 32, deren eines Ende 33 in einer Wand 34 des Zapfens 11 und deren anderes Ende 35 in einem Schlitz des Auges 10' aufgenommen ist. Dadurch wird der Zapfen 11 in Rücklaufrichtung 31 und in Abstreifstellung vorgespannt.

Der das Gehäuse 1 abschließende haubenförmige Deckel 16 hat in der Seitenwand 17 einen halbkreisförmigen Ausschnitt 18. Der Ausschnitt 18 des Deckels 16 begrenzt mit dem Vorsprung 7 der Seitenwand 6 und den Schlitzen 8 und 9 eine Bogenführung 19 für den Handgriff 13. Die Bogenführung 19 erstreckt sich über mehr als einen Halbkreis.

Das Gehäuse 1 enthält eine Entkernermulde 20 mit einem Durchgang 21 für den ausgelösten Kern und den Entkernerdorn 15. Unterhalb des Durchgangs 21 befindet sich ein Behälter 22 für die Kerne. Eine Schütte 23 mit einer Rinne 24 ist an die Seitenwand 4 angesetzt und mit der Rinne 24 auf einen Durchgang 25 der Seitenwand 4 ausgerichtet. Die Schütte 23 nimmt einen Vorrat zu entkernender Kirschen auf, die einzeln in die Entkernermulde 20 gleiten.

Etwa diametral der Entkernermulde 15 gegenüberliegend befindet sich eine Mulde oder Rinne 26 aus mehreren Stegen 27, 28, die vom Boden des Gehäuses 1 nach oben reichen. Die Oberkanten der seitlichen Stege 27 verlaufen etwa horizontal. Die Oberkanten der mittleren Stege 28 sind bogenförmig ausgebildet und damit eingetieft; sie enden in einen geneigtem Auslauf im Bereich des Austritts 29. Dadurch wird eine gegen den Austritt 29 geneigte Rinne oder offene Mulde gebildet. Die Mulde 26 öffnet sich in den Austritt 29 für die entkernten Kirschen, die in ein nicht dargestelltes Sammelgefäß rollen oder gleiten.

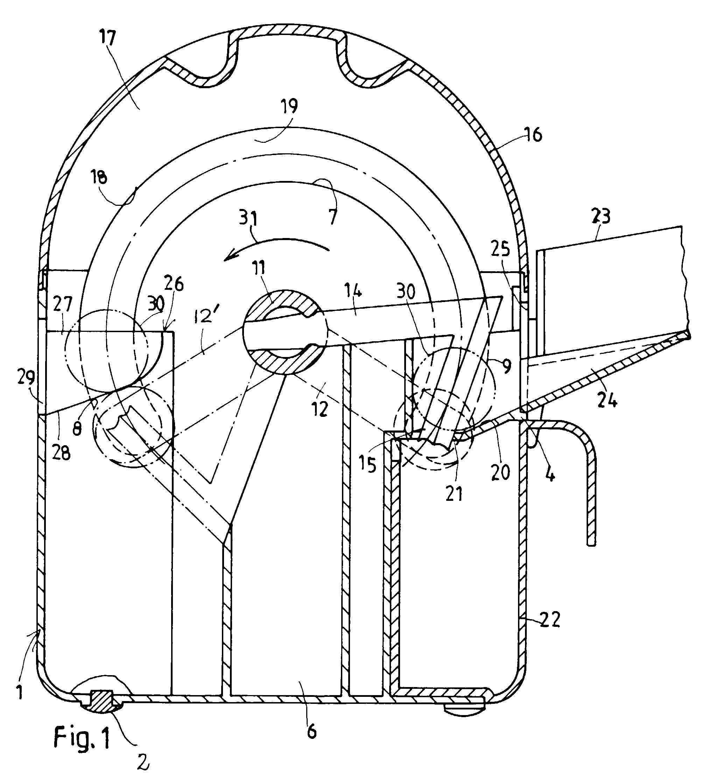

Fig. 1 stellt den Funktionsablauf des Kirschentkerners dar. In der Schütte 23 befindet sich ein nicht dargestellter Vorrat von Kirschen. Jeweils eine Kirsche 30 gelangt in die Entkernermulde 20. Die Kurbel 12 wird entgegen der Spannung der Schenkelfeder 32 bis ans Ende der Bogenführung 19 in die Entkernstellung verschwenkt. Dabei drückt der Entkernerdorn 15 den Kern aus der Kirsche 30 heraus und durch den Durchgang 21 hindurch, so daß der Kern in den Behälter 22 fällt.

Bei der Rückschwenkung der Kurbel unter der Wirkung der Schenkelfeder 32 verhakt sich der widerhakenartige Entkernerdorn 15 an der Kirsche, so daß dieselbe bei der Rückschwenkung in die um etwa 180° versetzte Stellung 12' mitgenommen wird. In dieser Stellung wird die Kirsche durch die Oberkanten der Stege 28 in der Mulde 26 von dem Entkernerdorn 15 abgestreift und rollt in den Austritt 29 und über einen Auslaufkanal in den nicht dargestellten Sammelbehälter.

Die Schwenkbewegung ist ohne Anstregung und Ermüdung durchzuführen. Die Rückschwenkung in die Abstreifstellung erfolgt weitgehend kraftfrei unter der Wirkung der Rückstellfeder. Die Kirschen werden von den Kernen sicher getrennt, da die Kerne und die Kirschen an diametral versetzten Stellen abgelegt werden. Das Abstreifen kann zusätzlich zu der Wirkung der Rückstellung durch eine Krafteinwirkung auf die Kurbel unterstützt werden. Die Ausrichtung des Entkernerdorns in Richtung des Umfangsbogens sichert ein leichtes und bewegungsgünstiges Entkernen und Abstreifen.

Die Schenkelfeder 32 hält den Zapfen 11 mit der Kurbel 12 immer in Bereitschaftstellung.

## Patentansprüche

1. Kirschentkerner mit einem Gehäuse (1) mit einer einen Durchgang (21) für den Kirschkern aufweisenden Entkernermulde (20), mit einem in dem Gehäuse (1) geführten, durch den Durchgang (21) bewegbaren, an einem in einem schwenkbar gelagerten Zapfen (11) gehaltenen, in Abstreifstellung vorgespannten Arm (14) sitzenden Enthernerdorn (15) mit einem Widerhakenkopf und mit einem in der Rücklaufbahn des Entkernerdorns (15) angeordneten Kirschabstreifer, an den ein Auslaufkanal anschließt, dadurch gekennzeichnet, daß an dem Zapfen (11) eine über einen Bogen (19) von mehr als 180° verschwenkbare Kurbel (12) mit einem Handgriff (13) angeordnet ist und daß der Kirschabstreifer mehrere Stege (27, 28) umfaßt, zwischen denen der Entkernerdorn (15) hindurchtritt und deren Oberkanten eine in einen Austritt (29) offene Mulde (26) bilden.

2. Kirschentkerner nach Anspruch 1, dadurch gekennzeichnet, daß die Oberkanten der mittleren Stege (28) bogenförmig mit geneigtem Auslauf gegen den Austritt (29) eingetieft sind.

3. Kirschentkerner nach Anspruch 1 oder 2, dadurch gekennzeichnet, daß der Handgriff (13) der Kurbel (12) in einer Bogenführung (19) der Seitenwand des Gehäuses geführt ist.

4. Kirschentkerner nach einem der Ansprüche 1 bis 3, dadurch gekennzeichnet, daß der Zapfen (11) der Kurbel (12) durch eine Schenkelfeder (32) vorgespannt ist.

5. Kirschentkerner nach einem der Ansprüche 1 bis 4, dadurch gekennzeichnet, daß der Entkernerdorn (15) abgewinkelt an einem Arm (14) sitzt, der radial in den Zapfen (11) eingesetzt ist.

6. Kirschentkerner nach Anspruch 5, dadurch gekennzeichnet, daß die Spitze des Entkernerdorns (15) etwa in Umfangsrichtung der Bodenführung (19) ausgerichtet ist.

## Revendications

1. Dénoyauteur de cerises présentant un boîtier (1) doté d'une goulotte de dénoyauteur (20) présentant un passage (2) pour les noyaux de cerises, un mandrin de dénoyauteur (15) guidé dans le boîtier (1), pouvant se déplacer à travers le passage (21) et reposant sur un bras (14) maintenu dans un tourillon (11) monté à pivotement et précontraint dans la position d'enlèvement, lequel mandrin de dénoyauteur présente une tête à contre-crochet et un dispositif d'enlèvement des cerises disposé dans le parcours de retour du mandrin dénoyauteur (15) et auquel se raccorde un canal de sortie, caractérisé en ce que sur le tourillon (11) est disposée une manivelle (12) à poignée (13), qui peut pivoter sur plus de 180°, et en ce que le dispositif d'enlèvement des cerises comporte plusieurs traverses (27, 28) entre lesquelles passe le mandrin dénoyauteur (15) et qui forment une goulotte (26) ouverte sur une sortie (29).

2. Dénoyauteur de cerises selon la revendication 1, caractérisé en ce que les bords supérieurs des traverses centrales (28) sont creusés en arc de cercle, avec une sortie inclinée vers la sortie (29).

3. Dénoyauteur de cerises selon la revendication 1 ou 2, caractérisé en ce que la poignée (13) de la manivelle (12) est guidée dans un guide courbe (19) de la paroi latérale du boîtier.

4. Dénoyauteur de cerises selon l'une des revendications 1 à 3, caractérisé en ce que le tourillon (11) de la manivelle (12) est précontraint par un ressort en spirale (32).

5. Dénoyauteur de cerises selon l'une des revendications 1 à 4, caractérisé en ce que le mandrin dénoyauteur (15) est placé obliquement sur un bras (14) qui est enfiché radialement dans le tourillon (11).

6. Dénoyauteur de cerises selon la revendication 5, caractérisé en ce que la pointe du mandrin dénoyauteur (15) est orientée sensiblement dans la direction périphérique du guide courbe (19).

## Claims

1. A cherry pitter having a housing (1) with a pitting hollow (20) which has a passage (21) for the cherry pit, having a pitting spike (15) which is guided in the housing (1), is movable through the passage (21), and is seated on an arm (14) held in a pivotally mounted peg (11) and pre-tensioned in the stripping position, this pitting spike (15) having a barbed head and a cherry stripper which is arranged in the return path of the pitting spike (15) and which is adjoined by an exit channel, characterised in that there is arranged on the peg (11) a crank (12) which may be pivoted over an arc (19) of more than 180° and has a handle (13), and in that the cherry stripper has a plurality of webs (27, 28) between which the pitting spike (15) passes and whereof the upper edges form a hollow (26) opening into an outlet (29).

2. A cherry pitter according to Claim 1, characterised in that the upper edges of the central webs (28) have an arcuate depression with an outward ramp inclined towards the outlet (29).

3. A cherry pitter according to Claim 1 or 2, characterised in that the handle (13) of the crank (12) is guided in an arcuate guideway (19) of the side wall of the housing.

4. A cherry pitter according to one of Claims 1 to 3, characterised in that the peg (11) of the crank (12) is pretensioned by a leg spring (32).

5. A cherry pitter according to one of Claims 1 to 4, characterised in that the pitting spike (15) is seated in a bent-off arrangement on an arm (14) which is inserted radially into the peg (11).

6. A cherry pitter according to Claim 5, characterised in that the tip of the pitting spike (15) is aligned approximately in the peripheral direction of the arcuate guideway (19).
